# FASCICULE DE BREVET EUROPEEN

(11) **EP 1 049 950 B1**
(45) Date de publication et mention de la délivrance du brevet: **13.03.2002**
(21) Numéro de dépôt: 99900985.5
(22) Date de dépôt: 22.01.1999
(51) Int. Cl.: G02B 7/182, G02B 23/16

(54) **ENSEMBLE DE MONTAGE ET DE CORRECTION DE POSITION D'UN ORGANE, TEL QU'UN MIROIR, D'UN TELESCOPE SPATIAL**
VORRICHTUNG ZUR MONTAGE UND LAGEKORREKTUR EINES ELEMENTES, WIE EINES SPIEGELS VON EINEM WELTRAUMTELESKOP
ASSEMBLY FOR MOUNTING AND CORRECTING THE POSITION OF AN ELEMENT, SUCH AS A MIRROR, OF A SPACE TELESCOPE

(30) Priorité: 22.01.1998 FR 9800663
(43) Date de publication de la demande: 08.11.2000
(73) Titulaire: ALCATEL, 75008 Paris (FR)
(72) Inventeur: Bailly, Bruno, 06210 Mandelieu (FR); VACANCE, Michel, F-06810 Auribeau sur Siagne (FR)
(74) Mandataire: Ilgart, Jean-Christophe
(86) Numéro de dépôt international: FR9900129
(87) Numéro de publication internationale: WO9938044

(56) Documents cités:
- EP-A- 0 628 940
- DE-A- 3 616 202
- DE-C- 4 117 538
- FR-A- 2 534 663
- FR-A- 2 622 980
- US-A- 4 655 563

## Description

### Domaine technique

L'invention concerne un ensemble intégré et de volume restreint, destiné à assurer le montage isostatique d'un organe sur une structure porteuse, en autorisant une correction de la position de cet organe selon six degrés de liberté.

Le terme "isostatique" signifie qu'aucune contrainte n'est engendrée dans l'organe supporté par l'ensemble de montage.

L'ensemble de montage selon l'invention peut être utilisé dans de nombreux domaines techniques, dès lors qu'il apparaît souhaitable de pouvoir corriger avec une grande précision le positionnement et l'orientation de l'organe supporté, en occupant un volume restreint et sans engendrer de déformation de cet organe.

Une application particulièrement avantageuse concerne les dispositifs optiques qui équipent les engins spatiaux, et notamment les télescopes spatiaux.

### Etat de la technique

Les télescopes comprennent différents éléments optiques tels que des miroirs et des lentilles.

Les performances optiques des télescopes sont fortement liées aux précisions d'alignement des éléments optiques qu'ils contiennent. Les précisions demandées sont donc d'autant plus grandes que les performances souhaitées sont importantes.

Dans le cas d'un télescope spatial, l'alignement des éléments optiques est effectué au sol.

Cet alignement est perturbé au cours du temps, notamment par les phénomènes suivants :
- déformations résiduelles consécutives aux charges de lancement (micro-déformations des pièces, glissement dans les liaisons) ;
- vieillissement des matériaux ;
- effets thermoélastiques (cycliques) et hygroélastiques.

Au cours de la vie orbitale du télescope, il est donc souhaitable de pouvoir compenser ces phénomènes perturbateurs par une correction de position précise d'un ou plusieurs des éléments optiques du télescope, selon au moins cinq degrés de liberté (la rotation d'un élément optique autour de l'axe optique est généralement sans effet sur les performances optiques). Cette correction de position peut être commandée soit par un ordinateur de bord, soit par une télécommande au sol, avec une fréquence et une amplitude variables.

Chaque élément optique concerné est donc relié à la structure porteuse par un ensemble de montage équipé de moyens de correction de position.

Afin que la correction de position soit effectuée sans déformation de l'élément optique, l'ensemble de montage doit intégrer des dispositifs filtrants.

De plus, l'ensemble de montage ne doit pas se situer sur le chemin optique du télescope, de manière à ne pas obturer le flux lumineux. En effet, cela entraînerait une perte de performances radiométriques du télescope. Il est donc important que l'ensemble de montage occupe un volume aussi réduit que possible. Dans le cas où l'élément optique est un miroir, cela permet notamment de placer l'ensemble de montage dans l'ombre de celui-ci.

Des ensembles de montage disposant de moyens de correction de position d'éléments optiques de télescopes spatiaux ont été proposés dans différents documents.

Ainsi, dans le document US-A-4 629 297, un miroir secondaire d'un télescope est supporté de façon à pouvoir être réglé selon cinq degrés de liberté. Le télescope comprend un tube extérieur, à l'intérieur duquel le miroir secondaire est monté par des branches orientées radialement. Dans le dispositif décrit, les moteurs permettant de commander la correction à distance de la position et de l'orientation du miroir secondaire sont placés à l'extérieur du tube extérieur. La transmission des mouvements entre les moteurs et le support flexible du miroir secondaire est assurée par des tiges logées dans certaines des branches, qui sont alors de forme tubulaire.

Cet agencement a pour inconvénient que, pour un encombrement global donné, le diamètre du tube extérieur doit être réduit. En effet, la disposition des moteurs à l'extérieur du tube se fait au détriment du diamètre de celui-ci. Les performances de l'instrument s'en trouvent ainsi réduites.

Des ensembles de montage utilisant des barres flexibles disposées tangentiellement entre l'organe à supporter et la structure porteuse sont décrits dans un certain nombre de documents. On citera notamment le document FR-A-2 517 019, le document FR-A-2 180 252 et le document FR-A-2 724 236. Toutefois, aucun de ces ensembles n'autorise un réglage de position et/ou d'orientation.

Dans le document US-A-4 726 671, des joints flexibles placés aux deux extrémités de chacune des barres tangentes autorisent des déplacements relatifs d'un miroir par rapport à son support, sans appliquer de contraintes inadmissibles sur le miroir. Cependant, les possibilités de réglage offertes par un tel mécanisme restent insuffisantes par rapport aux besoins engendrés par les perturbations qui se produisent après le réglage effectué au sol.

Dans le document EP-A-0 628 940, un système à vérins multiples est interposé entre un plancher et une plate-forme, pour simuler des mouvements de vol sur cette dernière. Le système est relié en trois points au plancher et en trois autres points à la plate-forme. En chacun de ces points sont articulés deux vérins. Les extrémités opposées de ces vérins sont elles mêmes articulées aux sommets d'un triangle déformable matérialisés par trois autres vérins, de façon à former un ensemble de triangles déformables juxtaposés.

Par ailleurs, le document DE-C- 41 17 538 propose Se monter une plaque portant un télescope et son banc optique, sur une plate-forme de satellite, au moyen de trois pieds dont chacun est matérialisé par deux barres télescopiques formant un V et dont les extrémités sont montées rotulantes, respectivement en trois points de la plate-forme et en six points de la plaque.

### Exposé de l'invention

L'invention a principalement pour objet un ensemble intégré et d'encombrement réduit, assurant le montage d'un organe sur une structure porteuse, tout en permettant d'effectuer une correction automatique de position et d'attitude selon six degrés de liberté, sur une course pouvant s'étendre à quelques centaines de micromètres en translation et à quelques centaines de microradians en rotation, avec une résolution de quelques dixièmes de micromètres.

Conformément à l'invention, ce résultat est obtenu au moyen d'un ensemble de montage d'un organe sur une structure porteuse, défini dans la revendication 1.

Dans une forme de réalisation préférée de l'invention, les trois dispositifs de montage sont identiques.

Lorsque l'organe à supporter présente un axe de symétrie, les trois dispositifs de montage sont, de préférence, régulièrement répartis autour d'un axe apte à coïncider avec cet axe de symétrie et les plans contenant les triangles formés par les dispositifs de montage sont sensiblement tangents à un cercle centré sur l'axe de symétrie précité.

Par ailleurs, les autres branches du triangle formé par chaque dispositif de montage peuvent être matérialisées soit par des bras rigides soit par des bras de longueur variable-. Dans le premier cas, les trois branches du triangle sont reliées les unes aux autres par des moyens d'articulation sans frottement et sans jeu.

Avantageusement, les moyens d'articulation sans frottement et sans jeu comprennent des paires de lames souples montées au moins dans le prolongement de chaque extrémité des deux autres branches du triangle formé par chaque dispositif de montage. Chaque paire de lames souples comprend alors deux lames souples fixées bout à bout selon un axe longitudinal de la branche qu'elles prolongent, et situées dans deux plans orthogonaux l'un à l'autre et passant par ledit axe longitudinal.

Les deux autres branches du triangle formé par chaque dispositif de montage sont généralement reliées à la pièce support par l'intermédiaire de l'un des moyens d'articulation sans frottement et sans jeu.

De préférence, les deux autres sommets du triangle formé par chaque dispositif de montage sont matérialisés par deux pièces de liaison. Les deux autres branches du triangle sont alors reliées à chacune des pièces de liaison par l'intermédiaire de l'un des moyens d'articulation sans frottement et sans jeu.

Selon une forme de réalisation préférée de l'invention, la première branche du triangle formé par chaque dispositif de montage est matérialisée par deux bras de longueur variable disposés côte à côte, sensiblement parallèlement l'un à l'autre. Deux premières extrémités opposées de chacun de ces deux bras sont alors reliées aux deux pièces d'ancrage respectives aptes à être montées sur la structure porteuse. Les deuxièmes extrémités opposées des deux bras coopèrent avec les deux pièces d'ancrage respectives par l'intermédiaire de moyens de guidage.

Dans ce cas, chaque pièce de liaison peut être fixée à l'une des deuxièmes extrémités opposées des bras et les moyens de guidage sont interposés entre les pièces de liaison et les pièces d'ancrage.

De préférence, l'un des moyens d'articulation sans frottement et sans jeu est alors interposé entre la première extrémité de chacun des bras et la pièce d'ancrage à laquelle cette première extrémité est reliée.

Dans la forme de réalisation préférée de l'invention, les axes longitudinaux des deux bras sont situés dans un plan qui peut être soit le plan contenant le triangle formé par le dispositif de montage incluant ces bras, soit un plan sensiblement perpendiculaire à ce plan.

Selon une première variante de réalisation de l'invention, la première branche du triangle formé par chaque dispositif de montage est matérialisée par deux bras de longueur variable, disposés bout à bout selon un axe longitudinal commun. Deux premières extrémités opposées de chacun des deux bras coopèrent alors respectivement avec ladite paire de pièces d'ancrage par l'intermédiaire de moyens de guidage et deux deuxièmes extrémités adjacentes de chacun des deux bras sont reliées à une troisième pièce d'ancrage apte à être fixée sur la structure porteuse.

Dans ce cas, chaque pièce de liaison est, de préférence, reliée à l'une des premières extrémités opposées des bras et les moyens de guidage sont interposés entre les pièces de liaison et la paire de pièces d'ancrage.

Dans cette première variante de réalisation de l'invention, l'un des moyens d'articulation sans frottement et sans jeu peut être interposé soit entre la troisième pièce d'ancrage et la deuxième extrémité de chacun des bras, soit entre la première extrémité de chacun des bras et la pièce de liaison à laquelle ce bras est relié.

Selon une deuxième forme de réalisation de l'invention, la première branche du triangle formé par chaque dispositif de montage est matérialisée par un bras unique, de longueur variable, dont une première extrémité est fixée sur une première pièce d'ancrage de ladite paire et dont une deuxième extrémité coopère avec une deuxième pièce d'ancrage de ladite paire par l'intermédiaire de moyens de guidage.

Dans ce cas, une première des pièces de liaison est, de préférence, solidaire de la première pièce d'ancrage. La deuxième pièce de liaison est alors fixée à la deuxième extrémité du bras unique, et les moyens de guidage sont interposés entre la deuxième pièce de liaison et la deuxième pièce d'ancrage.

De façon générale, les moyens de guidage peuvent être soit des moyens de guidage en translation sans frottement, soit des moyens de guidage en rotation, autour d'un axe perpendiculaire à un plan contenant le triangle formé par chaque dispositif de montage. Dans le premier cas, les moyens de guidage comprennent avantageusement au moins une lame souple perpendiculaire à l'axe longitudinal du bras avec lequel ces moyens de guidage coopèrent. La lame souple relie alors ce bras à la pièce d'ancrage adjacente.

Dans une application privilégiée de l'invention, l'organe à supporter est un miroir de télescope spatial.

### Brève description des dessins

On décrira à présent, à titre d'exemples non limitatifs, différentes formes de réalisation de l'invention, en se référant aux dessins annexés, dans lesquels :
- la figure 1 représente un ensemble de montage conforme à l'invention, observé selon l'axe de symétrie de l'organe supporté, en regardant de cet organe vers la structure porteuse ;
- la figure 2 est une vue en perspective qui représente l'un des dispositifs de montage de l'ensemble de la figure 1 et illustre une forme de réalisation préférée de l'invention ;
- la figure 3 est une vue en perspective comparable à la figure 2, illustrant une variante de la forme de réalisation préférée de l'invention ;
- la figure 4 est une vue en perspective comparable aux figures 2 et 3, illustrant une première variante de réalisation de l'invention ;
- la figure 5 est une vue en perspective comparable aux figures 2 à 4, illustrant une deuxième variante de réalisation de l'invention ;
- la figure 6 est une vue en perspective comparable aux figures 2 à 5, illustrant une autre forme de réalisation des moyens de guidage, appliquée à la première variante de réalisation de l'invention ; et
- la figure 7 est une vue en perspective comparable aux figures 2 à 6, illustrant une autre forme de réalisation des autres bras, appliquée à la première forme de réalisation préférée de l'invention.

### Description détaillée de plusieurs formes de réalisation de l'invention

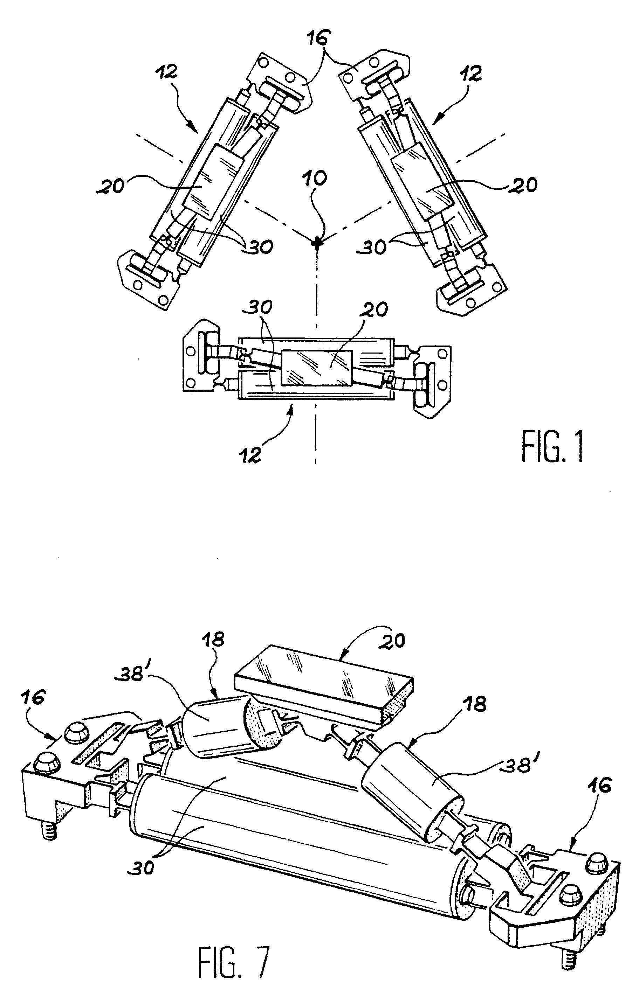

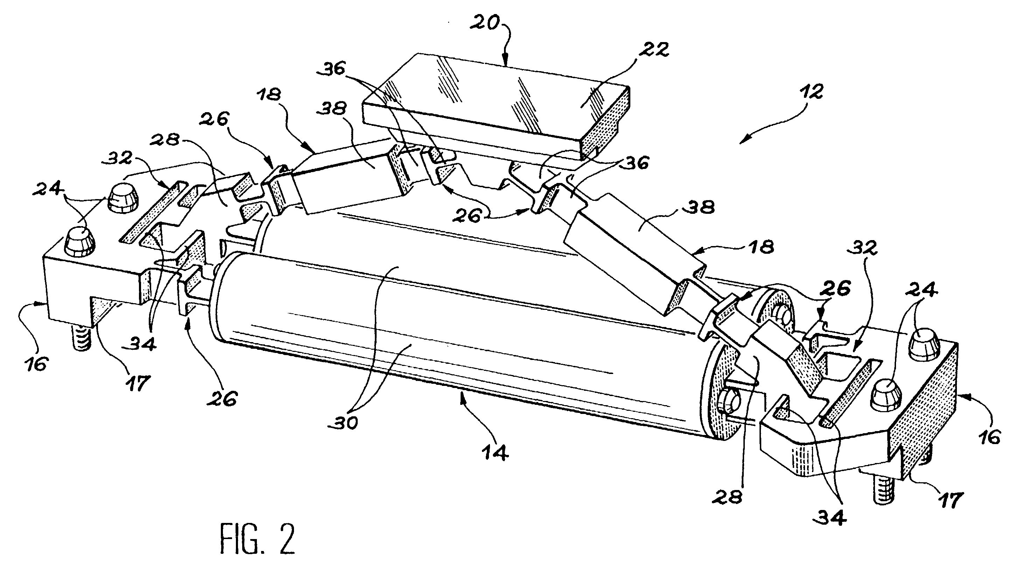

La forme de réalisation préférée de l'invention, illustrée sur les figures 1 et 2, concerne le cas d'un ensemble de montage agencé de façon symétrique par rapport à l'axe de symétrie 10 d'un organe (non représenté) supporté par cet ensemble. Dans d'autres formes de réalisation (non représentées) cette symétrie n'existe pas, soit parce que l'organe à supporter ne présente pas d'axe de symétrie, soit parce que cette symétrie ne peut être respectée, pour des raisons pratiques telles que des questions d'encombrement.

Comme on l'a déjà observé, l'ensemble de montage selon l'invention est particulièrement adapté au cas où l'organe à supporter est un miroir tel que le miroir secondaire d'un télescope spatial. D'autres applications peuvent toutefois être envisagées, sans sortir du cadre de l'invention.

Comme l'illustre la figure 1, l'ensemble de montage selon l'invention comprend trois dispositifs de montage 12 qui sont, de préférence, identiques. Dans l'agencement symétrique illustré sur la figure 1, les trois dispositifs de montage 12 sont régulièrement répartis, à 120° l'un de l'autre, autour de l'axe de symétrie 10 de l'organe à supporter.

Comme le montre mieux la figure 2, chacun des dispositifs de montage 12 présente approximativement la forme d'un triangle déformable, dans un plan orienté parallèlement à l'axe de symétrie 10 de l'organe à supporter. Plus précisément, le plan du triangle formé par chacun des dispositifs de montage 12 est sensiblement tangent à un cercle centré sur l'axe de symétrie 10 (figure 1).

De façon plus précise, le triangle déformable formé par chacun des dispositifs de montage 12 comprend une première branche 14, de longueur variable, prévue pour être montée sur une structure porteuse (non représentée) par deux pièces d'ancrage 16. Le triangle déformable comprend aussi deux deuxièmes branches 18, généralement d'égales longueurs, reliées entre elles en un premier sommet du triangle, opposé à la première branche 14 et matérialisé par une pièce support 20.

La pièce support 20 se présente sous la forme d'un patin dont une surface 22 est prévue pour être fixée sur l'organe à supporter, par exemple par collage. A cet effet, la surface 22 présente une forme complémentaire de celle de l'organe à supporter. La surface 22 est sensiblement perpendiculaire au plan du triangle formé par le dispositif de montage 12, et tournée vers l'extérieur de ce triangle. La surface 22 peut être également parallèle au plan du triangle dans le cas où l'on veut effectuer une reprise périphérique de l'organe à supporter.

Par ailleurs, les pièces d'ancrage 16 matérialisent les deux autres sommets du triangle formé par le dispositif de montage 12. Elles sont prévues pour être fixées sur la structure porteuse (non représentée) par des faces coplanaires 17, sensiblement parallèles à la surface 22 de la pièce support 20 et à l'axe longitudinal de la première branche 14. La fixation des pièces d'ancrage 16 sur la structure porteuse est assurée dans ce cas par des vis 24. Les surfaces 17 sont tournées vers l'extérieur du triangle formé par le dispositif de montage 12, c'est-à-dire à l'opposé de la surface 22 de la pièce support 20.

Dans la forme de réalisation préférée de l'invention illustrée sur les figures 1 et 2, la première branche 14 est matérialisée par deux bras 30 de longueur variable, disposés côte à côte sensiblement parallèlement l'un à l'autre. Une première extrémité d'un premier des bras 30 (situé en avant sur la figure 2) est reliée à une première des pièces d'ancrage 16 (située à gauche sur la figure 2). La deuxième extrémité de ce premier bras 30 (située à droite sur la figure 2) est fixée à une pièce de liaison 28, qui est elle-même reliée à la pièce support 20 par l'une des deuxièmes branches 18. L'autre deuxième branche 18 relie la pièce support 20 à une deuxième pièce de liaison 28 (située à gauche sur la figure 2). Cette deuxième pièce de liaison 28 est elle-même fixée à une première extrémité de l'autre premier bras 30 (situé en arrière sur la figure 2), adjacente à l'extrémité du premier bras 30 reliée à la première pièce d'ancrage 16. Enfin, la deuxième extrémité de l'autre premier bras 30 (située à droite sur la figure 2) est reliée à la deuxième pièce d'ancrage 16.

Dans la forme de réalisation préférée de l'invention illustrée plus en détail sur la figure 2, une extrémité de chacune des deuxièmes branches 18 est reliée à la pièce support 20 par un moyen d'articulation 26 sans frottement et sans jeu. La deuxième extrémité de chacune des deuxièmes branches 18 est reliée à la pièce de liaison 28 fixée à l'extrémité correspondante de la première branche 14, par un autre moyen d'articulation 26 sans frottement et sans jeu. De façon facultative, un autre moyen d'articulation 26 sans frottement et sans jeu est interposé entre la première extrémité du premier des bras 30 (situé en avant sur la figure 2) et la première des pièces d'ancrage 16 (située à gauche sur la figure 2), ainsi qu'entre la deuxième extrémité de l'autre bras 30 (situé en arrière sur la figure 2) et la deuxième pièce d'ancrage 16 (située à droite sur la figure 2).

Dans la forme de réalisation représentée sur les figures 1 et 2, chacun des moyens d'articulation 26 sans frottement et sans jeu comprend une paire de lames souples 36. Les lames souples 36 de chaque moyen d'articulation 26, sont placées bout à bouc, dans le prolongement de l'extrémité de la branche 14 ou 18 correspondante, selon l'axe longitudinal de cette branche. De plus, les deux lames souples 36 d'un même moyen d'articulation 26 sont planes au repos et situées dans deux plans orthogonaux l'un à l'autre et passant par l'axe longitudinal de la branche correspondante. De façon plus précise, l'une des lames souples 36 de chaque moyen d'articulation 26 est située dans le plan du triangle formé par le dispositif de montage 12, alors que l'autre lame souple 36 de ce même moyen d'articulation 26 est située dans un plan perpendiculaire à celui du triangle précité.

En outre, des moyens de guidage sont prévus entre chacune des pièces d'ancrage 16 et l'extrémité du bras 30 qui n'est pas reliée à cette pièce d'ancrage par un moyen d'articulation 26 sans frottement et sans jeu. Ces moyens de guidage sont désignés de façon générale par la référence 32 sur la figure 2.

Dans la forme de réalisation préférée de l'invention illustrée sur les figures 1 et 2, les moyens de guidage 32 sont des moyens de guidage en translation, sans frottement et sans jeu. Ils sont interposés entre les pièces d'ancrage 16 et les pièces de liaison 28 fixées aux extrémités correspondantes des bras 30.

Dans la forme de réalisation de l'invention illustrée en particulier sur la figure 2, les moyens de guidage 32 en translation comprennent deux lames souples 34, sensiblement planes lorsque les premiers bras 30 présentent un allongement moyen. Les deux lames souples 34 de chaque moyen de guidage 32 sont parallèles l'une à l'autre et perpendiculaire à l'axe longitudinal du bras 30 dont elles assurent le guidage. En outre, chacune des deux lames souples 34 est fixée, en des emplacements différents, à la pièce d'ancrage 16 et à la pièce de liaison 28 entre lesquelles ces lames sont interposées.

De façon plus précise, dans la forme de réalisation illustrée sur la figure 2, les lames souples 34 sont des lames sensiblement rectangulaires qui sont fixées aux pièces de liaison 28 dans leur partie centrale et aux pièces d'ancrage 16 par deux côtés opposés.

En raison de leur faible épaisseur, les lames souples 34 se déforment lorsque les premiers bras 30 s'allongent ou se rétractent. Cette déformation autorise un déplacement relatif en translation des pièces de liaison 28 par rapport aux pièces d'ancrage 16 parallèlement aux axes longitudinaux des bras 30. Tout autre mouvement relatif est empêché.

Les premiers bras 30 de longueur variable sont constitués dans la pratique par des actionneurs linéaires de nature quelconque, dont la longueur peut être modifiée par une télécommande électrique, mécanique ou thermique. Ainsi, les actionneurs linéaires constituant les premiers bras 30 dans la forme de réalisation des figures 1 et 2 peuvent être, par exemple, des éléments piézoélectriques, des moteurs électrostrictifs ou magnétostrictifs, des mécanismes du type vis-écrou, ou encore des éléments dont l'allongement résulte de leur dilatation thermique.

Par ailleurs, dans la première forme de réalisation des figures 1 et 2, les deux autres branches 18 du triangle formé par chaque dispositif de montage 12 sont matérialisées par des bras rigides 38, de longueur fixe.

Dans la forme de réalisation qui vient d'être décrite en se référant aux figures 1 et 2, lorsqu'on commande simultanément une variation de longueur de chacun des premiers bras 30, telle qu'un allongement, cette variation de longueur se produit en sens inverse sur chacun des bras, puisque ceux-ci sont montés en sens inverse entre les pièces d'ancrage 16.

Par conséquent, un allongement identique et simultané de chacun des bras 30 se traduit par un écartement des pièces de liaison 28 et, par conséquent, par une déformation du triangle formé par chacun des dispositifs de montage 12, tendant à rapprocher la pièce support 20 des deux pièces d'ancrage 16 parallèlement à l'axe de symétrie 10 de l'ensemble. Cette déformation est rendue possible par les moyens d'articulation 26 qui sont placés dans le prolongement des bras rigides 38. Les autres moyens d'articulation 26, placés dans le prolongement des premiers bras 30, permettent de diminuer la flexion dans les actionneurs linéaires constituant ces derniers, lorsque leur tenue mécanique le nécessite. C'est notamment le cas lors ces actionneurs sont des éléments piézoélectriques.

En commandant des variations de longueurs différentes des premiers bras 30, des déformations différentes du triangle peuvent être obtenues. Il est ainsi possible de déplacer la pièce support 20 dans la direction de l'axe 10 et dans une direction tangentielle par rapport à un cercle centré sur cet axe, de manière combinée ou dissociée selon le mouvement désiré.

Il est à noter que l'ouverture de l'angle formé entre les deux bras 18 privilégie, selon le cas, les déplacements de la pièce support 20 selon une direction parallèle à l'axe de symétrie 10 ou selon une direction tangentielle par rapport à un cercle centré sur cet axe. Ainsi, les déplacements selon l'axe 10 sont privilégiés lorsque cet angle est ouvert alors que les déplacements selon une direction tangentielle sont privilégiés lorsque l'angle est fermé.

L'ouverture de l'angle précité influence également les efforts que subissent les bras 38, ainsi que les actionneurs constituant les bras 30. Le choix de cet angle, lors de la conception de l'ensemble, est donc un compromis entre les amplitudes de déplacement souhaitées et les efforts admissibles sur les actionneurs.

La combinaison des différents déplacements autorisés par chacun des dispositifs de montage 12 permet d'obtenir sur l'ensemble de montage les six degrés de liberté désirés pour l'organe supporté.

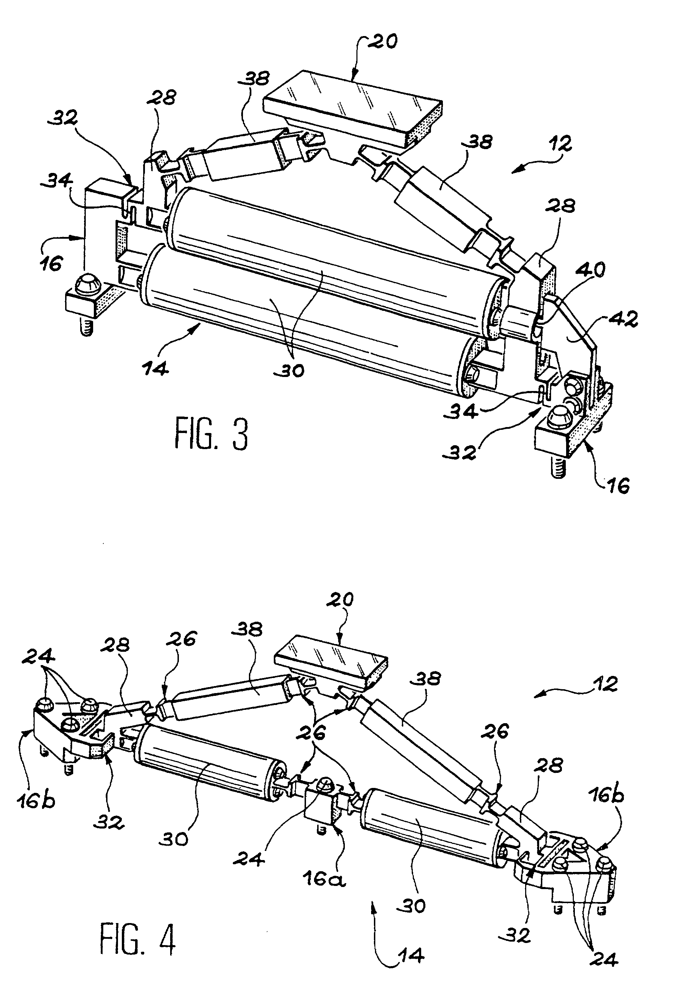

Sur la figure 3, on a représenté une variante de la forme de réalisation préférée de l'invention. Cette variante se distingue essentiellement par la disposition relative des deux premiers bras 30, dont on a vu que chacun d'entre eux est constitué par un actionneur linéaire. Ainsi, au lieu d'être agencés de telle sorte que le plan formé par leurs axes longitudinaux parallèles soit perpendiculaire au plan du triangle formé par chaque dispositif de montage 12, les deux bras 30 sont montés de façon telle que ces deux plans sont confondus. En d'autres termes, les axes longitudinaux parallèles des deux premiers bras 30 sont contenus dans le plan du triangle.

Cet agencement conduit à donner aux deux pièces d'ancrage 16 et aux deux pièces de liaison 28 des formes différentes. Il conduit aussi à modifier la forme des moyens de guidage 32 en translation, interposés entre chacune des pièces de liaison 28 et la pièce d'ancrage 16 adjacente.

En particulier, la pièce de liaison 28 située sur la droite de la figure 3, qui relie l'extrémité mobile du premier bras 30 le plus éloigné de la pièce support 20 à l'un des deuxièmes bras 38, présente un passage 40. Ce passage 40 est traversé librement, de préférence sans frottement et sans jeu, par une partie 42 de la pièce d'ancrage 16, à laquelle est fixée l'extrémité correspondante du premier bras 30 le plus proche de la pièce support 20.

Par ailleurs, les moyens de guidage 32 en translation, sans frottement et sans jeu, comprennent dans ce cas une lame 34 unique. Cette lame 34, de forme rectangulaire, est fixée par ses deux bords opposés respectivement à l'une des pièces de liaison 28 et à la pièce d'ancrage 16 adjacente.

Sur la figure 4, on a représenté l'un des trois dispositifs de montage 12 d'un ensemble de montage réalisé selon une première variante de réalisation de l'invention.

Dans cette première variante de réalisation de l'invention, la première branche 14 du triangle formé par chaque dispositif de montage 12 comprend deux bras 30, disposés bout à bout de telle sorte que leurs axes longitudinaux soient confondus.

Dans ce cas, les extrémités adjacentes des deux bras 30 sont reliées à une première pièce d'ancrage 16a, optionnellement par l'intermédiaire de deux moyens d'articulation 26 sans frottement et sans jeu.

Les extrémités opposées des premiers bras 30 sont solidaires de deux pièces de liaison 28, qui sont montées dans deux deuxièmes pièces d'ancrage 16b, par l'intermédiaire de moyens de guidage 32 en translation, selon l'axe longitudinal commun aux deux premiers bras 30.

Les moyens d'articulation 26 ainsi que les moyens de guidage 32 en translation sont réalisés de la même manière que dans la forme de réalisation préférée décrite précédemment en référence aux figures 1 et 2.

Les pièces d'ancrage 16a et 16b sont fixées à la structure porteuse (non représentée) par exemple au moyen de vis 24, comme dans la forme de réalisation préférée de l'invention.

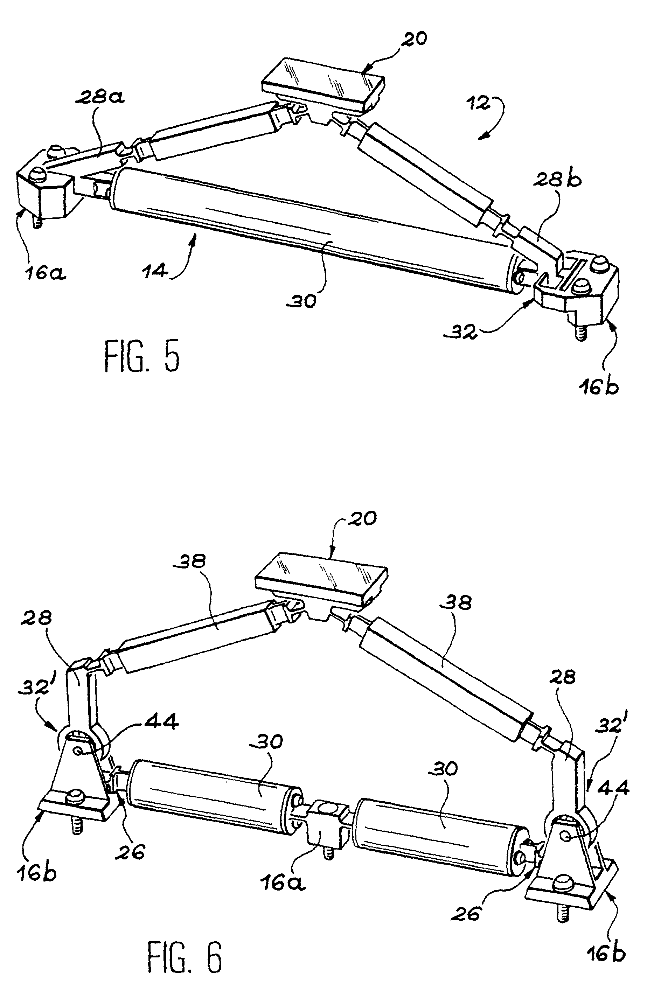

La figure 5 représente l'un des trois dispositifs de montage 12 d'un ensemble de montage selon une deuxième variante de réalisation de l'invention.

Dans cette deuxième variante de réalisation de l'invention, la première branche 14 du triangle formé par chacun des dispositifs de montage 12 est matérialisée par un bras 30 unique dont une première extrémité est fixée à une première pièce d'ancrage 16a solidaire d'une première pièce de liaison 28a. La deuxième extrémité du bras 30 est solidaire d'une deuxième pièce de liaison 28b qui coopère avec une deuxième pièce d'ancrage 16b, par l'intermédiaire de moyens de guidage 32 en translation, sans frottement.

Les moyens de guidage 32 en translation, sans frottement sont réalisés comme dans la forme de réalisation préférée décrite précédemment en se référant aux figures 1 et 2.

Dans cette deuxième variante de réalisation de l'invention, du fait que chacun des dispositifs de montage 12 comprend un seul bras 30, c'est-à-dire un seul actionneur linéaire, le déplacement de la pièce support 20 combine obligatoirement un déplacement selon une direction parallèle à l'axe de symétrie 10 de l'ensemble et un déplacement selon une direction tangentielle.

La figure 6 illustre une autre forme de réalisation des moyens de guidage 32 qui sont interposés entre l'une des extrémités de chacun des premiers bras 30 et la pièce d'ancrage correspondante. Cette autre forme de réalisation est représentée dans le cadre de la variante décrite précédemment en référence à la figure 4. Toutefois, elle peut s'appliquer également à la forme de réalisation préférée et à la première variante décrite, sans sortir du cadre de l'invention.

Dans ce cas, au lieu d'assurer un guidage en translation parallèlement à l'axe longitudinal du bras 30 correspondant, les moyens de guidage 32, sont des moyens de guidage en rotation, autour d'un axe de pivotement 44 perpendiculaire au plan du triangle formé par le dispositif de montage concerné.

De façon plus précise, chacune des pièces de liaison 28 est montée pivotante sur la pièce d'ancrage 16b qui lui correspond, au moyen de l'un des axes 44. Les axes 44 sont décalés vers la pièce support 20 par rapport à l'axe longitudinal commun aux deux bras 30, de telle sorte que les pièces de liaison 28 prennent alors la forme de deux leviers pivotants.

Un moyen d'articulation 26 sans frottement et sans jeu relie les extrémités de chaque pièce de liaison 28, respectivement aux extrémités adjacentes du premier bras 30 et du deuxième bras 38 correspondants.

Les moyens d'articulation 26 sont réalisés dans ce cas de la même manière que dans la forme de réalisation préférée décrite en se référant aux figures 1 et 2.

Sur la figure 7 on a représenté une autre forme de réalisation des deuxièmes branches 18 du triangle formé par chacun des dispositifs de montage 12 de l'ensemble. Cette forme de réalisation est illustrée dans le cas de la forme de réalisation préférée décrite précédemment en se référant aux figures 1 et 2. Toutefois, elle peut également s'appliquer aux première et deuxième variantes décrites, sans sortir du cadre de l'invention.

Dans cette autre forme de réalisation, au lieu d'être matérialisées par des bras rigides, de longueur fixe, les deuxièmes branches 18 du triangle sont matérialisées par ces bras 38', de longueur variable. Comme le ou les bras 30, ces bras 38' de longueur variable sont constitués par des actionneurs linéaires susceptibles d'être commandés par tout moyen approprié. Cet agencement permet d'amplifier les possibilités de déplacement des pièces supports 20 montées sur l'organe (non représenté) à supporter.

Grâce à la réalisation de chacun des dispositifs de montage 12 sous la forme d'un triangle déformable, on dispose d'un ensemble intégré et d'encombrement réduit, qui permet d'assurer une correction de position ce l'organe supporté, selon six degrés de liberté, tout en assurant un filtrage qui interdit toute déformation de cet organe. La correction de position qui peut ainsi être réalisée se caractérise par une course de quelques centaines de micromètres en translation et de quelques centaines de microradians en rotation, avec une résolution de quelques dixièmes de micromètres.

## Revendications

1. Ensemble de montage d'un organe sur une structure porteuse, comprenant trois dispositifs de montage (12) présentant chacun la forme d'un triangle déformable et **caractérisé par le fait que** chaque triangle a une première branche (14), de longueur variable, qui est montée, par ses extrémités opposées, sur une paire de pièces d'ancrage respectives (16,16a,16b) aptes à être fixées directement sur la structure porteuse et un premier sommet, opposé à la première branche, qui est matérialisé par une pièce support respective (20) apte à être fixée sur l'organe à monter.

2. Ensemble selon la revendication 1, dans lequel les trois dispositifs de montage (12) sont identiques.

3. Ensemble selon l'une quelconque des revendications 1 et 2, dans lequel les trois dispositifs de montage (12) sont régulièrement répartis autour d'un axe, apte à coïncider avec un axe de symétrie dudit organe.

4. Ensemble selon la revendication 3, dans lequel les plans contenant les triangles formés par les dispositifs de montage (12) sont sensiblement tangents à un cercle centré sur ledit axe.

5. Ensemble selon l'une quelconque des revendications 1 à 4, dans lequel les autres branches (18) du triangle formé par chaque dispositif de montage (12) sont matérialisées par des bras (38') de longueur variable.

6. Ensemble selon l'une quelconque des revendications 1 à 4, dans lequel les autres branches (18) du triangle formé par chaque dispositif de montage (12) sont matérialisées par des bras rigides (38), les trois branches du triangle étant reliées les unes aux autres par des moyens d'articulation (26) sans frottement et sans jeu.

7. Ensemble selon la revendication 6, dans lequel les moyens d'articulation (26) sans frottement et sans jeu comprennent des paires de lames souples (36) montées au moins dans le prolongement de chaque extrémité des deux autres branches (18) du triangle formé par chaque dispositif de montage (12), chaque paire de lames souples (36) comprenant deux lames souples (36) fixées bout à bout selon un axe longitudinal de la branche (18) qu'elles prolongent, et situées dans deux plans orthogonaux l'un à l'autre et passant par ledit axe longitudinal.

8. Ensemble selon l'une quelconque des revendications 6 et 7, dans lequel lesdites autres branches (18) du triangle formé par chaque dispositif de montage (12) sont reliées à la pièce support (20) par l'intermédiaire de l'un des moyens d'articulation (26) sans frottement et sans jeu.

9. Ensemble selon l'une quelconque des revendications 6 à 8, dans lequel les autres sommets du triangle formé par chaque dispositif de montage (12) sont matérialisés par deux pièces de liaison (28), lesdites autres branches (18) dudit triangle étant reliées à chacune des pièces de liaison (28) par l'intermédiaire de l'un des moyens d'articulation (26) sans frottement et sans jeu.

10. Ensemble selon l'une quelconque des revendications 1 à 9, dans lequel la première branche (14). du triangle formé par chaque dispositif de montage (12) est matérialisée par deux bras (30) de longueur variable disposés côte à côte, sensiblement parallèlement l'un à l'autre, deux premières extrémités opposées de chacun des deux bras (30) étant reliées aux deux pièces d'ancrage (16) respectives, les deux autres extrémités opposées des deux bras (30) coopérant avec les deux pièces d'ancrage (16) respectives par l'intermédiaire de moyens de guidage (32).

11. Ensemble selon les revendications 9 et 10 combinées, dans lequel chaque pièce de liaison (28) est fixée à l'une desdites autres extrémités opposées des bras (30), les moyens de guidage (32) étant interposés entre les pièces de liaison (28) et les pièces d'ancrage (16).

12. Ensemble selon la revendication 11, dans lequel l'un desdits moyens d'articulation (26) sans frottement et sans jeu est interposé entre la première extrémité de chacun des bras (30) et la pièce d'ancrage (16) à laquelle cette première extrémité est reliée.

13. Ensemble selon l'une quelconque des revendications 10 à 12, dans lequel les deux bras (30) présentent des axes longitudinaux situés dans un plan sensiblement perpendiculaire à un plan contenant le triangle formé par le dispositif de montage (12) incluant ces bras (30).

14. Ensemble selon l'une quelconque des revendications 10 à 12, dans lequel les deux bras (30) présentent des axes longitudinaux situés dans un plan contenant le triangle formé par le dispositif de montage (12) incluant ces bras (30).

15. Ensemble selon l'une quelconque des revendications 1 à 9, dans lequel la première branche du triangle formé par chaque dispositif de montage (12) est matérialisée par deux bras (30) de longueur variable, disposés bout à bout selon un axe longitudinal commun, deux premières extrémités opposées de chacun des deux bras coopérant respectivement avec ladite paire de pièces d'ancrage (16b) par l'intermédiaire de moyens de guidage (26), et deux deuxièmes extrémités adjacentes de chacun des deux bras étant reliées à une troisième (16a) pièce d'ancrage apte à être fixée sur la structure porteuse.

16. Ensemble selon les revendications 9 et 15 combinées, dans lequel chaque pièce de liaison (28) est reliée à l'une des premières extrémités opposées des bras (30), les moyens de guidage (32) étant interposés entre les pièces de liaison (28) et ladite paire de pièces d'ancrage (16b).

17. Ensemble selon l'une quelconque des revendications 15 et 16, dans lequel l'un desdits moyens d'articulation (26) sans frottement et sans jeu est interposé entre la troisième pièce d'ancrage (16a) et la deuxième extrémité de chacun des bras (30).

18. Ensemble selon la revendication 16, dans lequel l'un desdits moyens d'articulation (26) sans frottement et sans jeu est interposé entre la première extrémité de chacun des bras (30) et la pièce de liaison (28) à laquelle ce bras est relié.

19. Ensemble selon l'une quelconque des revendications 1 à 9, dans lequel la première branche (14) du triangle formé par chaque dispositif de montage (12) est matérialisée par un bras unique (30), de longueur variable, dont une première extrémité est fixée sur une première pièce d'ancrage (16a) de ladite paire de pièces d'ancrage et dont une deuxième extrémité coopère avec une deuxième pièce d'ancrage (16b) de ladite paire de pièces d'ancrage, par l'intermédiaire de moyens de guidage (32).

20. Ensemble selon les revendications 9 et 19 combinées, dans lequel une première (28a) des pièces de liaison est solidaire de la première pièce d'ancrage (16a), la deuxième pièce de liaison (28) étant fixée à la deuxième extrémité du bras unique (30) et les moyens de guidage (32) étant interposés entre la deuxième pièce de liaison (28b) et la deuxième pièce d'ancrage (16b).

21. Ensemble selon l'une quelconque des revendications 10 à 20, dans lequel les moyens de guidage (32) sont des moyens de guidage en translation sans frottement et sans jeu.

22. Ensemble selon la revendication 21, dans lequel les moyens de guidage (32) comprennent au moins une lame souple (34) perpendiculaire à un axe longitudinal du bras (30) avec lequel ces moyens de guidage coopèrent, ladite lame souple (34) reliant ce bras (30) à la pièce d'ancrage (16) adjacente.

23. Ensemble selon l'une quelconque des revendications 10 à 20, dans lequel les moyens de guidage (32) sont des moyens de guidage en rotation, autour d'un axe (44) perpendiculaire à un plan contenant le triangle formé par chaque dispositif de montage (12).

24. Ensemble selon l'une quelconque des revendications précédentes, dans lequel l'organe à supporter est un miroir de télescope spatial.

## Patentansprüche

1. Einheit zur Montage eines Elements auf einer Trägerstruktur mit drei Montagevorrichtungen (12), von denen jede die Form eines verformbaren Dreiecks aufweist, und **dadurch gekennzeichnet, daß** jedes Dreieck einen ersten Schenkel (14) mit variabler Länge, der an seinen entgegengesetzten Enden an einem Paar jeweiliger Verankerungsteile (16, 16a, 16b) angebracht ist, welche direkt auf der Trägerstruktur befestigt werden können, sowie einen dem ersten Schenkel gegenüberliegenden ersten Scheitel, der aus einem jeweiligen Halterungsteil (20) besteht, das an dem zu montierenden Element befestigt zu werden vermag, aufweist.

2. Einheit nach Anspruch 1, wobei die drei Montagevorrichtungen (12) identisch sind.

3. Einheit nach einem der Ansprüche 1 oder 2, wobei die drei Montagevorrichtungen (12) regelmäßig um eine Achse herum verteilt sind, die mit einer Symmetrieachse des Elements zusammenfallen kann.

4. Einheit nach Anspruch 3, wobei die Ebenen, welche die durch die Montagevorrichtungen (12) gebildeten Dreiecke enthalten, im wesentlichen Tangenten an einen auf der Achse zentrierten Kreis bilden.

5. Einheit nach einem der Ansprüche 1 bis 4, wobei die anderen Schenkel (18) des von jeder Montagevorrichtung (12) gebildeten Dreiecks aus Armen (38') mit variabler Länge bestehen.

6. Einheit nach einem der Ansprüche 1 bis 4, wobei die anderen Schenkel (18) des von jeder Montagevorrichtung (12) gebildeten Dreiecks aus starren Armen (38) bestehen, wobei die drei Schenkel des Dreiecks durch Gelenkmittel (26) ohne Reibung und ohne Spiel miteinander verbunden sind.

7. Einheit nach Anspruch 6, wobei die Gelenkmittel (26) ohne Reibung und ohne Spiel Paare flexibler Platten (36) umfassen, die mindestens in der Verlängerung jedes Endes der beiden anderen Schenkel (18) des von jeder Montagevorrichtung (12) gebildeten Dreiecks angebracht sind, wobei jedes Paar flexibler Platten (36) zwei flexible Platten (36) umfaßt, die aneinanderstoßend längs einer Längsachse des Schenkels (18), den sie verlängern, befestigt sind und in zwei zueinander orthogonalen und durch die Längsachse laufenden Ebenen gelegen sind.

8. Einheit nach einem der Ansprüche 6 oder 7, wobei die anderen Schenkel (18) des von jeder Montagevorrichtung (12) gebildeten Dreiecks mittels eines der Gelenkmittel (26) ohne Reibung und ohne Spiel mit dem Halterungsteil (20) verbunden sind.

9. Einheit nach einem der Ansprüche 6 bis 8, wobei die anderen Scheitel des von jeder Montagevorrichtung (12) gebildeten Dreiecks aus zwei Verbindungsteilen (28) bestehen, wobei die anderen Schenkel (18) des Dreiecks mit jedem der Verbindungsteile (28) mittels eines der Gelenkmittel (26) ohne Reibung und ohne Spiel verbunden sind.

10. Einheit nach einem der Ansprüche 1 bis 9, wobei der erste Schenkel (14) des von jeder Montagevorrichtung gebildeten Dreiecks aus zwei Armen (30) mit variabler Länge besteht, die nebeneinander im wesentlichen parallel zueinander angeordnet sind, wobei zwei erste entgegengesetzte Enden von jedem der zwei Arme (30) mit zwei betreffenden Verankerungsteilen (16) verbunden sind, und die beiden anderen entgegengesetzten Enden der beiden Arme (30) mit den beiden betreffenden Verankerungsteilen (16) mittels Führungsmitteln (32) zusammenwirken.

11. Einheit nach Anspruch 9 in Kombination mit Anspruch 10, wobei jedes Verbindungsteil (28) an einem der anderen entgegengesetzten Enden der Arme (30) befestigt ist, und die Führungsmittel (32) zwischen die Verbindungsmittel (28) und die Verankerungsmittel (16) eingefügt sind.

12. Einheit nach Anspruch 11, wobei eines der Gelenkmittel (26) ohne Reibung und ohne Spiel zwischen das erste Ende jedes der Arme (30) und das Verankerungsteil (16), mit dem dieses erste Ende verbunden ist, eingefügt ist.

13. Einheit nach einem der Ansprüche 10 bis 12, wobei die beiden Arme (30) Längsachsen aufweisen, die in einer Ebene gelegen sind, die im wesentlichen senkrecht zu einer das von der Montagevorrichtung (12), welche diese Arme (30) enthält, gebildete Dreieck enthaltenden Ebene ist.

14. Einheit nach einem der Ansprüche 10 bis 12, wobei die beiden Arme (30) Längsachsen aufweisen, die in einer das von der Montagevorrichtung (12), welche diese Arme (30) enthält, gebildete Dreieck enthaltenden Ebene gelegen sind.

15. Einheit nach einem der Ansprüche 1 bis 9, wobei der erste Schenkel des von jeder Montagevorrichtung (12) gebildeten Dreiecks aus zwei Armen (30) variabler Länge besteht, welche aneinanderstoßend längs einer gemeinsamen Längsachse angeordnet sind, wobei zwei erste entgegengesetzte Enden jedes der beiden Arme jeweils mit dem Paar Verankerungsteile (16b) mittels der Führungsmittel (26) zusammenwirken, und wobei zwei zweite, benachbarte Enden jedes der zwei Arme mit einem dritten (16a) Verankerungsteil verbunden sind, das auf der Trägerstruktur befestigt werden kann.

16. Einheit nach Anspruch 9 in Kombination mit Anspruch 15, wobei jedes Verbindungsteil (28) mit einem der ersten entgegengesetzten Enden der Arme (30) verbunden ist, wobei die Führungsmittel (32) zwischen die Verbindungsteile (28) und das Paar Verankerungsteile (16b) eingefügt sind.

17. Einheit nach einem der Ansprüche 15 oder 16, wobei eines der Gelenkmittel (26) ohne Reibung und ohne Spiel zwischen das dritte Verankerungsteil (16a) und das zweite Ende jedes der Arme (30) eingefügt ist.

18. Einheit nach Anspruch 16, wobei eines der Gelenkmittel (26) ohne Reibung und ohne Spiel zwischen das erste Ende jedes der Arme (30) und das Verbindungsmittel (28), mit dem dieser Arm verbunden ist, eingefügt ist.

19. Einheit nach einem der Ansprüche 1 bis 9, wobei der erste Schenkel (14) des von jeder Montagevorrichtung (12) gebildeten Dreiecks aus einem einzelnen Arm (30) mit variabler Länge besteht, von dem ein erstes Ende an einem ersten Verankerungsteil (16a) des Paars Verankerungsteile befestigt ist, und von dem ein zweites Ende mit einem zweiten Verankerungsteil (16b) des Paars Verankerungsteile mittels Führungsmitteln (32) zusammenwirkt.

20. Einheit nach Anspruch 9 in Kombination mit Anspruch 19, wobei ein erstes (28a) der Verbindungsteile einstückig mit dem ersten Verankerungsteil (16a) ist, das zweite Verbindungsteil (28) am zweiten Ende des einzelnen Arms (30) befestigt ist, und die Führungsmittel (32) zwischen das zweite Verbindungsteil (28b) und das zweite Verankerungsteil (16b) eingefügt sind.

21. Einheit nach einem der Ansprüche 10 bis 20, wobei die Führungsmittel (32) Translations-Führungsmittel ohne Reibung und ohne Spiel sind.

22. Einheit nach Anspruch 21, wobei die Führungsmittel (32) mindestens eine flexible Platte (34) aufweisen, die senkrecht zu einer Längsachse des Arms (30) ist, mit dem diese Führungsmittel zusammenwirken, wobei die flexible Platte (34) diesen Arm (30) mit dem benachbarten Verankerungsteil (16) verbindet.

23. Einheit nach einem der Ansprüche 10 bis 20, wobei die Führungsmittel (32) sich um eine zu einer das von jeder Montagevorrichtung (12) gebildete Dreieck enthaltenden Ebene senkrechte Achse (44) drehende Führungsmittel sind.

24. Einheit nach einem der vorangehenden Ansprüche, wobei das zu halternde bzw. zu tragende Element ein Weltraum-Teleskopspiegel ist.

## Claims

1. Mounting assembly for a device on a support structure, comprising three mounting devices (12), each in the form of a deformable triangle and **characterized in that** each triangle has a first, variable length arm (14), mounted by its opposite ends on a pair of respective anchor parts (16, 16a, 16b) directly fixable to the support structure and a first vertex, opposite to the first arm and which is materialized by a respective support part (20) fixable to the member to be mounted.

2. Assembly according to claim 1, in which the three mounting devices (12) are identical.

3. Assembly according to either of claims 1 and 2, in which the three mounting devices (12) are uniformly distributed around an axis, able to coincide with an axis of symmetry of said member.

4. Assembly according to claim 3, in which the planes containing the triangles formed by the mounting devices (12) are approximately tangent to a circle centred on the said axis.

5. Assembly according to any one of claims 1 to 4, in which the other sides (18) of the triangle formed by each mounting device (12) are materialized, by variable length arms (38').

6. Assembly according to any one of claims 1 to 4, in which the other sides (18) of the triangle formed by each mounting device (12) are materialized by rigid arms (38), the three arms of the triangle being connected to each other by friction free hinges with zero play (26).

7. Assembly according to claim 6, in which the friction free hinges with zero play (26) comprise pairs of flexible strips (36) mounted at least in the extension of each end of the other two sides (18) of the triangle formed by each mounting device (12), each pair of flexible strips (36) comprising two flexible strips (36) fixed end to end along a longitudinal axis of the side (18) that they extend, and located in two planes orthogonal to each other and passing through the said longitudinal axis.

8. Assembly according to either of claims 6 and 7, in which the other sides (18) of the triangle formed by each mounting device (12) are connected to the support part (20) through one of the friction free hinges with zero play (26).

9. Assembly according to any one of claims 6 to 8, in which the other two vertices of the triangle formed by each mounting device (12) are materialized by two connecting parts (28), the other two sides (18) of the said triangle are then connected to each connecting part (28) by means of one of the friction free hinges with zero play (26).

10. Assembly according to any one of claims 1 to 9, in which the first arm (14) of the triangle formed by each mounting device (12) is materialized by two variable length arms (30) located side by side approximately parallel to each other, the two first opposite ends of each of these two arms (30) are then connected to two anchor parts (16) that can be assembled on the support structure, the other two opposite ends of the two arms (30) cooperating with the two anchor parts (16) through guide means (32).

11. Assembly according to claim 9 and claim 10 combined, in which each connecting part (28) is fixed to one of the other opposite ends of the arms (30), guide means (32) being inserted between the connecting parts (28) and the anchor parts (16).

12. Assembly according to claim 11, in which one of the said friction free hinges with zero play (26) is inserted between the first end of each of the arms (30) and the anchor part (16) to which this first end is connected.

13. Assembly according to any one of claims 10 to 12, in which the two arms (30) have longitudinal axes in a plane which is approximately perpendicular to a plane containing the triangle formed by the mounting device (12) containing these arms (30).

14. Assembly according to any one of claims 10 to 12, in which the two arms (30) have longitudinal axes located in a plane containing the triangle formed by the mounting device (12) containing these arms (30).

15. Assembly according to any one of claims 1 to 9, in which the first arm of the triangle formed by each mounting device (12) is materialized by two variable length arms (30) located end to end along a common longitudinal axis, two first opposite ends of each of the two arms cooperating with said pair of anchor parts (16b) through guide means (26), and two second adjacent ends of each of the two arms being connected to a third anchor part (16a) fixable to the support structure.

16. Assembly according to claim 9 and claim 15 combined, in which each connecting part (28) is connected to one of the first opposite ends of the arms (30) and guide means (32) are inserted between the connecting parts (28) and said pair of anchor parts (16b).

17. Assembly according to either of claims 15 or 16, in which one of the said friction free hinges with zero play (26) is inserted between the third anchor part (16a) and the second end of each of the arms (30).

18. Assembly according to claim 16, in which one of the friction free hinges with zero play (26) is inserted between the first end of each of the arms (30) and the connecting part (28) to which said arm is connected.

19. Assembly according to any one of claims 1 to 9, in which the first arm (14) of the triangle formed by each mounting device (12) is materialized by a single variable length arm (30), a first end of which is fixed on a first anchor part of said pair of anchor parts (16a) and a second end of which cooperates with a second anchor part (16b) of said pair of anchor parts through guide means (32).

20. Assembly according to claims 9 and 19 combined, in which a first connecting part (28a) is fixed to the first anchor part (16a), the second connecting part (28) being fixed to the second end of the single arm (30), with guide means (32) being inserted between the second connecting part (28b) and the second anchor part (16b).

21. Assembly according to any one of claims 10 to 20, in which the guide means (32) are friction free translation guide means with zero play.

22. Assembly according to claim 21, in which the guide means (32) comprise at least one flexible strip (34) perpendicular to the longitudinal axis of the arm (30) with which these guide means cooperate, the said flexible strip (34) connecting this arm (30) to the adjacent anchor part (16).

23. Assembly according to any one of claims 10 to 20, in which the guide means (32) are guide means in rotation about an axis (44) perpendicular to a plane containing the triangle formed by each mounting device (12).

24. Assembly according to any one of the previous claims, in which the device to be supported is a space telescope mirror.
